# EUROPÄISCHE PATENTSCHRIFT

(11) **EP 2 111 963 B1**
(45) Veröffentlichungstag und Bekanntmachung des Hinweises auf die Patenterteilung: **08.05.2013**
(21) Anmeldenummer: 09004649.1
(22) Anmeldetag: 31.03.2009
(51) Int. Cl.: B29C 45/14, H01H 49/00

(54) **Verfahren zur Herstellung eines Spulensystems, Spulensystem und Spritzgussform zur Herstellung eines Spulenkörpers**
Method for manufacturing a coil system, coil system und injection mould for producing a coil body
Procédé de fabrication d'un système de bobine, systeme de bobine et moule pour produire un corps de bobine

(30) Priorität: 24.04.2008 DE 102008020617
(43) Veröffentlichungstag der Anmeldung: 28.10.2009
(73) Patentinhaber: Panasonic Electric Works Europe AG, 83607 Holzkirchen (DE)
(72) Erfinder: Oberndorfer, Johannes, 83714 Miesbach (DE); Ritthammer, Jörg, 85276 Pfaffenhofen an der Ilm (DE)
(74) Vertreter: Beckord, Klaus

(56) Entgegenhaltungen:
- WO-A-2008/028668
- DE-A1- 19 639 876
- DE-C1- 19 634 843
- DE-T5-112005 003 548
- JP-A- 6 111 701

## Beschreibung

Die Erfindung betrifft ein Verfahren zur Herstellung eines Spulensystems für ein elektromagnetisches Relais, bei dem in einer Spritzgussform ein Spulenkörper durch teilweises Umspritzen eines Jochs mit Kunststoff erzeugt und dann der Spulenkörper mit einer Spule versehen wird. Weiterhin betrifft die Erfindung ein Verfahren zur Herstellung eines elektromagnetischen Relais, bei dem ein solches Spulensystem benötigt wird. Darüber hinaus betrifft die Erfindung ein entsprechend hergestelltes Spulensystem und ein elektromagnetisches Relais mit einem solchen Spulensystem sowie eine Spritzgussform zur Herstellung eines Spulenkörpers für ein solches Spulensystem.

Herkömmlicherweise werden elektromagnetische Relais so hergestellt, dass eine Magnetspule sowie Festkontakte und Federkontakte mit ihren Anschlusselementen durch entsprechende Öffnungen bzw. Schlitze eines Relais-Grundkörpers bzw. einer Grundplatte hindurch gesteckt und anschließend durch Verkleben fixiert und abgedichtet werden. Das heißt, sämtliche wesentliche Bauteile werden direkt auf den Grundkörper montiert. Dann werden die übrigen Relaisbauteile montiert, beispielsweise der Anker mit der Magnetspule gekoppelt sowie die Kontaktfedern über die Betätiger mit dem Anker gekoppelt. Nach einer Justage und Prüfung der Baugruppe wird dann eine Gehäusekappe aufgesetzt und mit dem Grundkörper verbunden. Der Grundkörper wird üblicherweise im Spritzgussverfahren hergestellt. Dabei kann es zu einem Verzug kommen, wodurch sich die Positionen der Öffnungen für die Anschlussstifte der einzelnen Elemente ändern, was zu einer Fehlpositionierung der einzelnen Elemente in sich und zueinander führen kann. Diese Fehlstellung kann sich auf die Position der Kontakte und ggf. auf das Ansprech- und Abfallverhalten sowie die Lebensdauer des Relais auswirken. Sie muss daher in einem aufwändigen Justageprozess korrigiert werden.

In der WO 2008/028668 A1 wird ein Herstellungsverfahren beschrieben, bei dem zunächst ein Spulensystem mit einem Spulenkörper erzeugt wird, der aus einem teilweise mit Kunststoff umspritzten Joch besteht und um welchen die Spule gewickelt ist. Ebenso sind die Kontakte auf einem Kontaktträger aus Kunststoff vormontiert. Das komplette Spulensystem und das Kontaktsystem bzw. die Kontaktsysteme werden dann mit ihren Kunststoffkörpern auf den Relais-Grundkörper montiert, wobei die Anschlusselemente des Spulensystems und der Kontaktsysteme durch Durchbrüche im Grundkörper hindurchgeführt sind, so dass sie später außerhalb des Gehäuses kontaktiert werden können. Dabei sind die Durchbrüche im Grundkörper jeweils größer als der Querschnitt der betreffenden Anschlusselemente des Spulensystems bzw. der Kontaktsysteme. Spulensystem und Kontaktsysteme werden dann zueinander ausgerichtet und durch ein Laserschweißverfahren mit dem Grundkörper verbunden. Durch dieses Herstellungsverfahren ist, im Verhältnis zu herkömmlichen Verfahren, bereits eine erhebliche Reduzierung der Toleranzen der einzelnen Komponenten des elektromagnetischen Relais möglich.

Bei diesem Aufbau werden jedoch noch verbleibende Toleranzen in erster Linie durch den Spritzgussprozess bei der Herstellung des Spulensystems vorgegeben. Diese Toleranzen machen sich unter anderem in Form von Schwankungen in der Anzug- und Abfallspannung und dadurch in der Kontaktlebensdauer des Relais bemerkbar, was zu einem noch verbleibenden Aufwand und entsprechenden Kosten für einen zusätzlichen Justagevorgang führt.

In der DE 196 39 876 A1 werden ein Spritzgieß-Montageverfahren und eine hierfür verwendbare Spritzgießform beschrieben, bei dem ein Spulenkörper, eine Spule, ein Kern, ein Magnet und Polschuhe in einer gemeinsamen Spritzgießform in mehreren Prozessstufen nacheinander umspritzt werden, wobei die Funktionsteile durch bewegliche Positionshalter in der Spritzgießform gehalten werden können. Zwischen den einzelnen Umspritzungsvorgängen können die Positionshalter in ihrer Lage verändert werden. Es soll so ein kompletter Grundkörper des Relais mit den Funktionsteilen einstückig ausgebildet werden. Dieses Gesamtverfahren ist hinsichtlich des mehrstufigen Umspritzens relativ aufwendig. Zudem bleibt auch bei dieser Lösung das Problem der zwischen dem Anker und den Polschuhen des Spulenkörpers möglichen Toleranzen, die in erster Linie für die genannten Schwankungen in der Anzug- und Abfallspannung verantwortlich sind. Ein ähnliches Verfahren wird in der DE 196 34 843 C1 beschrieben, in der vorgeschlagen wird, zum Einspritzen von Formteilen ein Gießformteil mit einem Formkern und gegebenenfalls zusätzlichen Abstützstiften zu nutzen. Auch hier wird aber das Problem der Toleranzen zwischen einem Anker und Polschuhen des Relais nicht adressiert. Ebenso wird dieses Problem in der JP 06111701 A, in der auch ein Spritzgießprozess zum integrierten Einspritzen eines Spulensystems und der feststehenden Kontakte eines Relais beschrieben wird, nicht angesprochen.

Es ist daher eine Aufgabe der vorliegenden Erfindung, ein verbessertes Verfahren zur Herstellung eines Spulensystems mit einem darauf basierenden verbesserten Verfahren zur Herstellung eines elektromagnetischen Relais sowie ein entsprechendes Spulensystem und elektromagnetisches Relais zu schaffen, so dass eine günstigere Relaismontage möglich ist.

Diese Aufgabe wird durch ein Verfahren zur Herstellung eines Spulensystems gemäß Patentanspruch 1, ein Verfahren zur Herstellung eines elektromagnetischen Relais gemäß Patentanspruch 3, ein Spulensystem gemäß Patentanspruch 5, ein elektromagnetisches Relais gemäß Patentanspruch 6 und durch eine Spritzgussform gemäß Patentanspruch 7 zur Verwendung in dem erfindungsgemäßen Herstellungsverfahren gelöst.

Bei dem erfindungsgemäßen Verfahren zur Herstellung eines Spulensystems wird ebenfalls in einer Spritzgussform durch teilweises Umspritzen eines Jochs, welches z. B. aus einem üblichen weichmagnetischen Werkstoff wie Eisen oder dergleichen besteht, mit Kunststoff ein Spulenkörper erzeugt. Dieser Spulenkörper wird dann mit einer Induktionsspule versehen, d. h. der Spulenkörper wird beispielsweise in der üblichen Weise in einer Wickelmaschine mit Wickeldraht, z. B. Kupferlackdraht, umwickelt. Erfindungsgemäß wird das Joch beim Umspritzen mit dem Kunststoff innerhalb der Spritzgussform mit Hilfe einer Fixiereinrichtung so fixiert, dass eine exakt definierte Ausrichtung zumindest einer Polfläche des Jochs relativ zu einem Ankerlager des Spulenkörpers erfolgt, an welchem ein Anker mit dem Spulenkörper gekoppelt wird. Diese Polfläche bildet dann eine Referenzfläche. Da die Polfläche des Jochs gleichzeitig auch eine Anschlagfläche für die Polfläche des Ankers bildet, wird durch die exakt definierte Ausrichtung dieser Polfläche zum Ankerlager erreicht, dass Insbesondere das Ankerlager, beispielsweise ein Ankerlagerzapfen, auf welchen der Anker mit einer Lagerbohrung aufgesteckt wird, oder eine Ankerlagerbohrung, in welche ein am Anker befestigter Zapfen eingesteckt wird, mit geringeren Toleranzmaßen als üblich hergestellt werden kann, da die Passigkeit zwischen Anker und Spulenkörper an den für den Anker wesentlichen Abmessungen genauer ist.

Erfindungsgemäß ist weiterhin das Joch U-förmig ausgebildet und das Ankerlager am Spulenkörper ist so ausgebildet, dass der Anker um eine sich parallel zwischen den beiden U-Schenkeln des Jochs erstreckende Ankerlagerachse verschwenkbar ist. Vor dem Spritzgießen werden jeweils von einer Innenwand der Spritzgussform aus in die Spritzgussform herein Druckelemente bewegt, welche zur Fixierung des Jochs seitlich auf parallel zur U-Querschnittsfläche liegende Seitenflächen der U-Schenkel des Jochs drücken und die U-Schenkel jeweils an einer bestimmten Position in der Spritzgussform halten, wobei durch die beweglichen Druckelemente jeweils eine Kraft auf die bezüglich der Ankerlagerachse kreuzweise gegenüberliegenden Seitenflächen der beiden U-Schenkel des Jochs wirkt.

Durch diese Ausrichtung und Zwangsfixierung des Jochs in der Spritzgussform beim Umspritzen können auch Abweichungstoleranzen zwischen Joch und anderen Kunststoffteilen des Spulenkörpers minimiert bzw. gegen Null gebracht werden. Somit kann das gesamte Spulensystem hinsichtlich der relevanten Abmessungen exakter gebaut werden und auch die spätere Kopplung des Spulensystems mit dem Anker kann exakter, d. h. mit geringeren Toleranzen, erfolgen. Zudem wird durch die Zwangsfixierung der Referenzfläche, d. h. der Polfläche, des Jochs in einer definierten Lage innerhalb des Spulenkörpers auch eine sehr genaue Referenz für die spätere Positionierung der weiteren Komponenten des Relais festgelegt. So kann die Endjustage einiger Relaiskomponenten vereinfacht werden oder entfallen, was insbesondere eine weitere Miniaturisierung des Relaisaufbaus erlaubt.

Ein erfindungsgemäßes Spulensystem weist einen durch teilweises Umspritzen eines Jochs mit Kunststoff in einer Spritzgussform erzeugten Spulenkörper auf, der mit einer Spule versehen ist, wobei sich durch eine mit Hilfe einer Fixiereinrichtung erreichte Zwangsfixierung des Jochs innerhalb der Spritzgussform während des Umspritzens mit dem Kunststoff in der oben beschriebene Weise die Polflächen des Jochs in einer exakt definierten Ausrichtung relativ zu einem Ankerlager des Spulenkörpers befindet, an welchem ein Anker mit dem Spulenkörper koppelbar ist. Unter "exakt definiert" ist hierbei eine Lage bzw. Ausrichtung zu verstehen, deren Toleranz minimal, d. h. nahezu Null (vorzugsweise unter 5 µm) ist, im Gegensatz zu Toleranzen von bis zu einem Zehntel Millimeter, wie sie sonst in Spritzgussverfahren üblich sind.

Eine erfindungsgemäße Spritzgussform zur Herstellung eines Spulenkörpers durch teilweises Umspritzen eines U-förmig ausgebildeten Jochs mit Kunststoff für ein Spulensystem eines elektromagnetischen Relais weist eine Fixiereinrichtung auf, um das Joch beim Umspritzen mit dem Kunststoff innerhalb der Spritzgussform zu fixieren. Dabei weist die Spritzgussform, z. B. als Teil der Fixiereinrichtung, zumindest einen Anschlag auf, um das Joch beim Umspritzen mit dem Kunststoff innerhalb der Spritzgussform so zu fixieren, dass eine exakt definierte Ausrichtung einer Polfläche des Jochs relativ zu einem Ankerlager des Spulenkörpers erreicht wird, an welchem ein Anker mit dem Spulenkörper koppelbar ist. Erfindungsgemäß weist die Spritzgussform dabei von einer Innenwand aus In die Spritzgussform herein bewegliche Druckelemente auf, welche zur Fixierung des Jochs innerhalb der Spritzgussform während des Umspritzens mit dem Kunststoff seitlich auf parallel zur U-Querschnittsfläche liegende Seitenflächen der U-Schenkel des Jochs drücken und die U-Schenkel jeweils an einer bestimmten Position in der Spritzgussform halten, wobei durch die beweglichen Druckelemente jeweils eine Kraft auf die bezüglich der Ankerlagerachse kreuzweise gegenüberliegenden Seitenflächen der beiden U-Schenkel des Jochs wirkt.

Bei dieser für das Verfahren bevorzugten Ausbildung der Spritzform wird also dafür gesorgt, dass die Positioniereinrichtung so ausgebildet ist, dass zumindest eine die Referenzfläche bildende Polfläche des Jochs selbst dann exakt festliegt, wenn das Jochs selbst eine höhere Fertigungstoleranz aufweist Dies wird einfach erreicht, indem ein geeigneter Fixpunkt durch den Anschlag in der Spritzgussform vorgegeben wird, an dem die betreffende Polfläche bei der Fixierung anliegt. Dieser Anschlag kann tatsächlich unveränderlich, fix in der Form ausgebildet sein. Beispielsweise kann er auch durch ein hierfür vorgesehenes, entsprechend genau ausgebildetes Innenwandteil der Spritzform gebildet sein. Er kann aber auch verstellbar ausgebildet sein. Wesentlich ist, dass er während des Fixiervorgangs des Jochs in der Spritzgussform so weit feststeht, dass dadurch die oben genannten sehr geringen Toleranzen gewährleistet sind. Wird bei der Herstellung darauf geachtet, dass ein Joch mit allenfalls sehr geringen Bauteiltoleranzen verwendet wird, was bei Metallbauteilen in der Regel möglich ist, wird durch die erfindungsgemäße Fixierung im Übrigen dafür gesorgt, dass gleichzeitig alle Polflächen exakt ausgerichtet sind.

Die abhängigen Ansprüche und die weitere Beschreibung enthalten besonders vorteilhafte Ausgestaltungen und Weiterbildungen der Erfindung.

Erfindungsgemäß ist das Joch U-förmig ausgebildet und das Ankerlager ist am Spulenkörper so ausgebildet, dass der Anker, wenn er mit dem Spulenkörper gekoppelt ist, um eine sich parallel, vorzugsweise mittig, zwischen den beiden U-Schenkeln des Jochs erstreckende Ankerlagerachse verschwenkbar ist. Insbesondere bei dieser im Folgenden noch genauer erläuterten Variante kann das Joch vorzugsweise an beiden U-Schenkeln jeweils eine Polfläche aufweisen, gegen die entsprechende Polflächen des um die parallel zu den Schenkeln verlaufende Ankerlagerachse verschwenkbaren Ankers anschlagen.

Bei der Fixierung des Jochs in der Spritzform wird vorteilhaft darauf geachtet, dass die beiden Polflächen an den beiden U-Schenkeln des Jochs - einen exakt definierten Drehwinkel bezüglich der Ankerlagerachse aufweisen. Dadurch wird eine besonders gute Referenz für die spätere Justage des Kontaktsystems bzw. der Kontaktsysteme zum Spulensystem zur Verfügung gestellt, da ja letztlich die jeweilige bewegliche Kontaktfeder des betreffenden Kontaktsystems über einen Betätiger mit dem Anker gekoppelt wird und durch den exakt definierten Drehwinkel der Polflächen des Jochs zur Ankerlagerachse auch automatisch ein exakt definierter Anschlagdrehwinkel des Ankers vorgegeben wird. Das heißt, es gibt nahezu keine Toleranzen bezüglich dieses Drehwinkels innerhalb einer Serie von hergestellten Spulensystemen.

Bei einem bevorzugten konkreten Ausführungsbeispiel ist das U-förmig ausgebildete Joch unter Bildung des Spulenkörpers partiell im Bereich des U-Balkens mit Kunststoff umspritzt, wobei die U-Schenkel des Jochs an beiden Seiten aus dem Kunststoffteil des Spulenkörpers herausragen und jeweils die Polflächen aufweisen. Der Spulenkörper ist dabei so geformt, dass sich ein Ankerlagerzapfen, vorzugsweise mittig, zwischen den beiden U-Schenkein des Jochs parallel zu diesen erstreckt. Dieser Ankerlagerzapfen wird durch entsprechende Ausbildung der Spritzgussform beim Spritzgießen erzeugt Auf diesen Ankerlagerzapfen kann dann der Anker einfach mit einer mittigen Lagerbohrung aufgesteckt werden, wobei durch die erfindungsgemäß vorgesehene exakte Ausrichtung der Polflächen des Jochs relativ zum Ankerlagerzapfen das Spiel des Ankeriagerzapfens in der Lagerbohrung des Ankers erheblich geringer sein kann als bei den herkömmlichen Konstruktionen.

Als Fixiereinrichtung weist die Spritzgussform wie beschrieben von einer Innenwand aus in die Spritzgussform hinein bewegliche Druckelemente auf, welche das Joch zumindest bezüglich einer Polfläche in einer exakt definierten Stellung innerhalb der Spritzgussform zwangsfixieren. Die Spritzgussform weist Kammern zur Aufnahme der nicht zu umspritzenden U-Schenkel des Jochs auf. Diese Kammern sind von ihren lichten Abmessungen so beschaffen, dass die
U-Schenkel des Jochs gut in die Kammern hineinpassen und allenfalls ein geringer Spalt verbleibt, der eng genug ist, so dass das Kunststoffmaterial beim Spritzgießen nicht um die freizulassenden U-Schenkel gepresst wird. Wie bereits oben erläutert, sollte zumindest eine Polfläche der U-Schenkel in einer genauen Position fixiert werden. Daher werden vorzugsweise vor dem Spritzgießen jeweils von der betreffenden Innenwand in den jeweiligen Kammern, welche die U-Schenkel des Jochs aufnehmen, die Druckelemente In die Spritzgussform hinein bewegt, so dass sie zur Fixierung des Jochs seitlich auf parallel zur U-Querschnittsfläche liegende Seitenflächen der U-Schenkel des Jochs drücken und die U-Schenkel so jeweils an der vorgegebenen Position, vorzugsweise gegen einen wie oben beschriebenen Anschlag gedrückt, in der zugehörigen Kammer der Spritzgussform halten.

Dabei sind wie bereits erwähnt die beweglichen Druckelemente so in der Spritzgussform angeordnet und werden so gegen das Joch gedrückt, dass jeweils eine Kraft auf die bezüglich der Ankerlagerachse kreuzweise gegenüberliegenden Seitenflächen der beiden U-Schenkel des Jochs ausgeübt wird. Das heißt, die Kraft auf die beiden U-Schenkel wirkt in gleicher Drehrichtung um die Ankerlagerachse. Auf diese Weise wird sichergestellt, dass die Anschlagpositionen für die beiden Polflächen des um die Ankerlagerachse schwenkbaren Ankers exakt relativ zur Ankerlagerachse ausgerichtet sind.

Ein erfindungsgemäßes elektromagnetisches Relais weist wie das eingangs genannte Relais einen Grundkörper, ein an dem Grundkörper angeordnetes Spulensystem, welches mit einem Anker gekoppelt ist, sowie ein am Grundkörper angeordnetes, mit dem Anker, z. B. über einen Betätiger, gekoppeltes Kontaktsystem auf, wobei das Spulensystem in der erfindungsgemäßen Weise aufgebaut ist.

Das erfindungsgemäße Verfahren zur Herstellung eines solchen elektromagnetischen Relais weist folgende Verfahrensschritte auf:

Es wird zunächst In der erfindungsgemäßen Weise ein Spulensystem hergestellt. Dieses Spulensystem wird später mit einem Anker gekoppeltEs erfolgt weiterhin eine Montage des Spulensystems an einem Relais-Grundkörper sowie eine Montage eines Kontaktsystems an dem Relais-Grundkörper. Außerdem werden ein oder mehrere Kontakte des Kontaktsystems mit dem Anker, z. B. in der üblichen Weise, gekoppelt. Dabei können selbstverständlich die Verfahrensschritte in anderer geeigneter Reihenfolge durchgeführt werden. Beispielsweise wird in der Regel zunächst das Spulensystem an dem Relais-Grundkörper und ggf. gleichzeitig das Kontaktsystem an dem Relais-Grundkörper montiert. Erst danach erfolgt die Kopplung des Spulensystems mit dem Anker, wobei gleichzeitig der Federkontakt oder die Federkontakte des Kontaktsystems mit dem Anker gekoppelt werden.

Dabei werden zur Montage des Spulenkörpers und eines Kunststoffträgerkörpers des Kontaktsystems an dem Relais-Grundkörper der Spulenkörper und der Kontaktsystemträgerkörper zueinander ausgerichtet und am Relais-Grundkörper gehalten und schließlich fixiert. Dies kann vorzugsweise wie In der eingangs beschriebenen WO 2008/028668 A1 mit Hilfe eines Laserschweißverfahrens erfolgen. Bezüglich der Montage des Spulensystems und des Kontaktsystems sowie der Kopplung der Kontakte mit dem Anker wird hierzu explizit auf diese Schrift verwiesen. D. h. die komplette Endmontage des elektromagnetischen Relais kann in der in dieser Schrift beschriebenen Weise erfolgen und braucht daher hier nicht weiter erläutert zu werden.

Wie in dieser Schrift auch erläutert wird, kann die Ausrichtung des Kontaktsystems und des Spulensystems zueinander und/oder an dem Relais-Grundkörper insbesondere mit Hilfe einer geeigneten Lehre erfolgen, welche geeignete Ausnehmungen aufweist und welche während der Fixierung an geeigneter Stelle kammartig auf das Spulensystem und das Kontaktsystem geschoben wird und so das Spulensystem und Kontaktsystem an einer genau definierten Position zueinander und ggf. zum Relais-Grundkörper hält. Bei dem erfindungsgemäßen Verfahren wird vorzugsweise ebenfalls eine solche geeignete Lehre verwendet. Besonders bevorzugt erfolgt dabei die Ausrichtung an einer Polflächen des Jochs. Da, wie bereits zuvor beschrieben, die Polfläche des Jochs in einer exakt definierten Position zur Ankerlagerachse liegt und somit nur geringste Abweichungen bezüglich einer optimalen Lage der Polflächen relativ zur Ankerposition bestehen, ist diese Polfläche als Referenzfläche für die weitere Positionierung des Kontaktsystems relativ zum Spulensystem besonders gut geeignet.

Die Erfindung wird im Folgenden unter Hinweis auf die beigefügten Figuren anhand von Ausführungsbeispielen noch einmal näher erläutert. Hieraus ergeben sich noch weitere Einzelheiten und Vorteile der Erfindung. Es zeigen:
Figur 1 eine Draufsicht auf ein Ausführungsbeispiel eines erfindungsgemäßen elektromagnetischen Relais in einer ersten Schaltstellung,
Figur 2 eine Draufsicht auf ein Ausführungsbeispiel des Relais nach Figur 1 in einer zweiten Schaltstellung,
Figur 3 eine Seitenansicht des Spulenkörpers und des Ankers des elektromagnetischen Relais in Blickrichtung S gemäß Figur 1 in der ersten Schaltstellung des Ankers,
Figur 4 eine Seitenansicht des Spulenkörpers und des Ankers gemäß Figur 3, jedoch mit im Spulenkörper verkipptem Joch (übertrieben dargestellt),
Figur 5 eine Draufsicht auf einen Spulenkörper für ein Spulensystem eines elektromagnetischen Relais gemäß Figur 1,
Figur 6 eine schematische Seitenansicht des Spulenkörpers gemäß Figur 5,
Figur 7 eine schematische Darstellung der Wirkungsweise einer Fixiereinrichtung in einer Spritzgussform zur Herstellung eines Spulenkörpers gemäß den Figuren 5 und 6 von oben gesehen,
Figur 8 eine schematische Darstellung der Wirkungsweise einer Fixiereinrichtung in einer Spritzgussform zur Herstellung eines Spulenkörpers gemäß den Figuren 5 und 6 im Querschnitt von der Seite aus gesehen,
Figur 9 ein Diagramm mit Kraft-Weg-Kennlinien (Magnetkennlinien) eines erfindungsgemäßen Relais,
Figur 10 ein Diagramm mit entsprechenden Kraft-Weg-Kennlinien eines nicht gemäß der Erfindung aufgebauten Relais zum Vergleich,

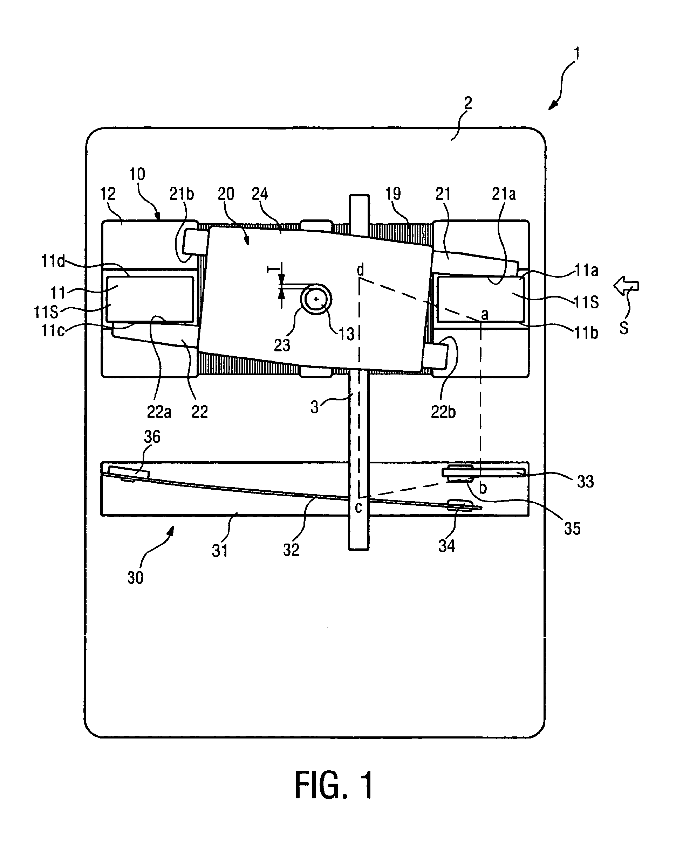

Das in Figur 1 gezeigte Ausführungsbeispiel eines erfindungsgemäßen elektromagnetischen Relais 1 weist eine Kunststoffgrundplatte 2 auf, auf welcher ein Spulensystem 10 befestigt ist, welches mit einem Anker 20 gekoppelt ist.

Außer dem Spulensystem 10 befindet sich auf dem plattenförmigen Relais-Grundkörper 2 noch ein Kontaktsystem 30. Dieses besteht aus einem Kunststoffträgerkörper 31, auf dem an einem Kontaktfederanschlusselement 36 eine bewegliche Kontaktfeder 32 montiert ist und auf dem ein Festkontaktelement 33 montiert ist. Die Kontaktfeder 32 ist über einen üblichen Betätiger 3 mit dem Anker 20 gekoppelt.

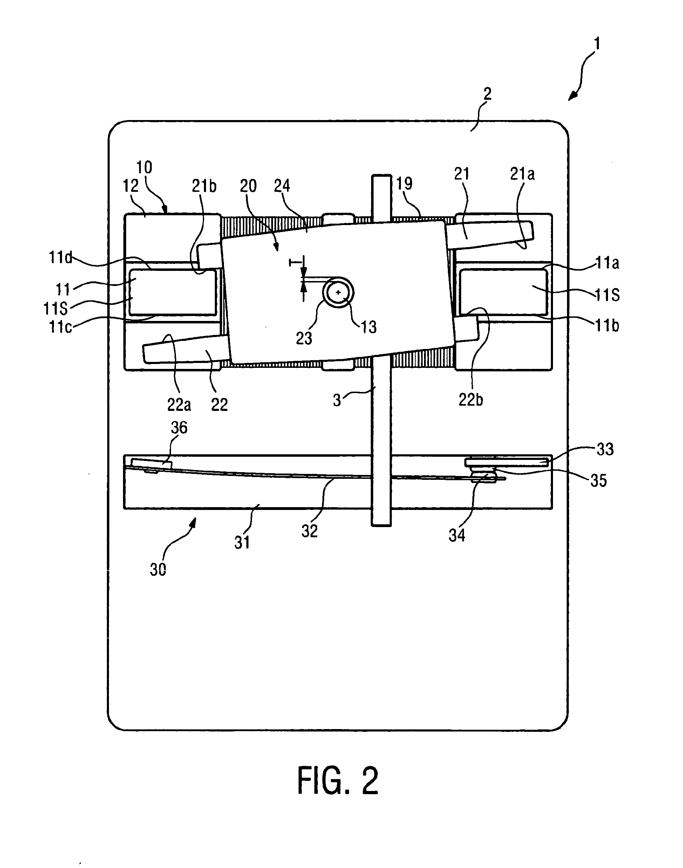

Bei der in der Figur 1 dargestellten Schaltstellung des Relais 1 ist die Kontaktfeder 32 in einer Stellung, in der das am freien Ende der Kontaktfeder 32 befindliche Federkontakt 34 den Festkontakt 35 des Festkontaktelements 33 nicht kontaktiert, d. h. der Kontakt ist offen. Figur 2 zeigt das Relais 1 in einer zweiten Schaltstellung, in der der Kontakt geschlossen ist.

Neben diesem ersten Kontaktsystem 30 können über den Betätiger 3 oder über weitere Betätiger, die auch mit dem Anker 20 gekoppelt sind, auch zusätzliche Kontaktsysteme im Relais vorhanden sein, die immer parallel zum dargestellten Kontaktsystem 30 angeordnet werden. Im Detail ist der Aufbau im Wesentlichen wie bei dem in der WO 2008/028668 A1 beschriebenen Relais, auf die bezüglich dieser Aufbaudetails hier verwiesen wird. Wie in der dort beschriebenen Schrift kann auch hier das Relais 1 nach der fertigen Montage mit einer Gehäusekappe versehen werden, die am Rand mit dem Grundkörper 2 fest verbunden, beispielsweise mittels eines Lasers verschweißt wird und das Relais 1 gegenüber der Umgebung dicht abschließt..

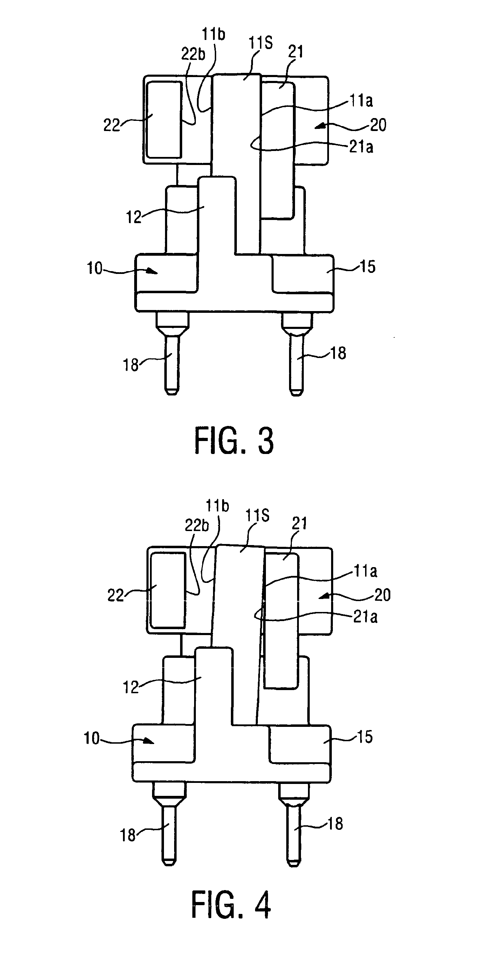

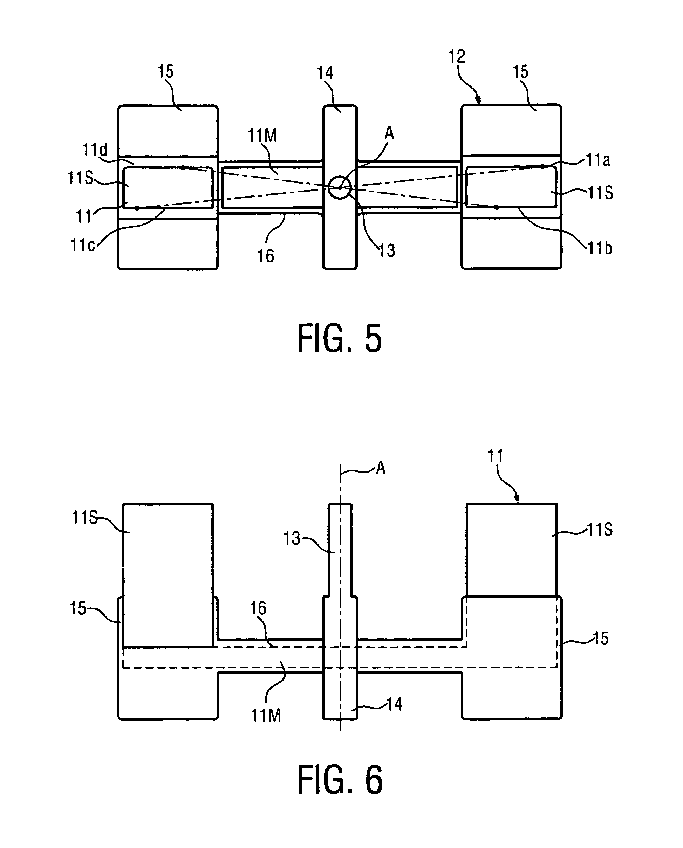

Das Spulensystem 10 besteht aus einem Spulenkörper 12, welcher gefertigt wird, indem ein U-förmiges Joch 11 aus Eisen partiell mit Kunststoff umspritzt wird. Die Figuren 5 und 6 zeigen diesen Spulenkörper 12 ohne die Spule jeweils in einer Ansicht von oben und von der Seite. Wie dort zu erkennen ist, ist das U-förmige Joch 11 nur jeweils im unteren Bereich der U-Schenkel 11 S und entlang des mittleren U-Balkens 11 M mit Kunststoff umspritzt, wobei aus dem Kunststoff jeweils zwei Endflansche 15 an den zum U-Balken 11 M angrenzenden Enden der U-Schenkel 11 S des Jochs 11 ausgebildet sind und ein Mittelflansch 14, welcher sich quer zur Längsrichtung des U-Balkens 11 M des Jochs 11 mittig zwischen den Endflanschen 15 erstreckt. Entlang des U-Balkens 11 M ist das Joch 11 nur an zwei Seiten 16 relativ dünn mit Kunststoff umspritzt. Zwischen den Endflanschen 15 und dem Mittelflansch 14 ergeben sich Freiräume, in die jeweils die Spule 19 gewickelt wird, wie dies in den Figuren 1 und 2 zu erkennen ist. Die Spule 19 ist endseitig jeweils mit Spulenanschlüssen 18 verbunden, die nach unten von den Endflanschen 15 wegragen (siehe Seitenansicht in Figur 3, die den Spulenkörper 12 ohne Spule, aber mit dem Anker 20 in der ersten Schaltstellung zeigt).

Das Spulensystem 10 wird dann - nachdem zuvor die Spule 19 aufgewickelt wurde - zur Montage mit den Endflanschen 15 und dem Mittelflansch 14 auf den Relais-Grundkörper 2 aufgesetzt, so dass die Spulenanschlüsse 18 an der Unterseite der Endflansche 15 durch entsprechende Ausnehmungen im Relais-Grundkörper 2 hindurchragen. Dann erfolgt eine Ausrichtung des Spulensystems 10, und die Endflansche 15 und der Mittelflansch 14 werden mittels Laserschweißens mit dem Kunststoff-Relais-Grundkörper 2 verbunden.

Wie in den Figuren 5 und 6 sehr gut zu erkennen ist, ist am Mittelflansch 14 ein Ankerlagerzapfen 13 angespritzt, welcher sich exakt mittig zwischen den U-Schenkeln 11 S des Jochs 11 parallel zu diesen erstreckt. Auf diesem Ankerlagerzapfen 13 kann, wie dies in Figur 1 und 2 zu sehen ist, der Anker 20 mit einer Ankerlagerbohrung 23 aufgesteckt werden, so dass er um die Ankerlagerachse A zwischen den beiden in den Figuren 1 und 2 gezeigten Schaltstellungen verschwenkbar ist. Der Anker 20 ist hier ein H-förmiger Anker (Draufsicht in Fig. 1), welcher aus einem permanentmagnetischen Kern und zwei Polschuhen 21, 22 besteht, die sich an den beiden die Polflächen bildenden Längsseiten des Permanentmagnetkerns erstrecken. Der Permanentmagnetkern des Ankers 20 kann vorzugsweise aus Samarium-Kobalt, Aluminium-Nickel-Kobalt, Neodym-Eisen-Bor oder einem anderen permanentmagnetischen Material ausgebildet sein. Die Polschuhe 21, 22 sind beispielsweise aus Weicheisen.

Die Polschuhe 21, 22 liegen direkt oder mit einem geringen Luftspalt an dem permanentmagnetischen Kern an, welcher auch mehrteilig ausgebildet sein kann, und der Kern ist gemeinsam mit den angrenzenden Ankerpolschuhen 21, 22 von einem Kunststoffmantel 24 umspritzt. Die Ankerlagerbohrung 23 kann eine Bohrung durch den Permanentmagnetkern des Ankers 20 sein. Wenn der Permanentmagnetkern mehrteilig ausgebildet ist, kann die Bohrung beispielsweise auch in einem Spritzgussverfahren beim Umspritzen des Permanentmagnetkerns und der Polschuhe 21, 22 mit eingespritzt werden.

Die Polschuhe 21, 22 sind jeweils so lang, dass sie endseitig aus dem Kunststoffmantel 24 herausragen und so die Polflächen 21 a, 22a, 21 b, 22b bilden. Dabei ist die Form der Polschuhe 21, 22 derart, dass sie jeweils auf einer Seite eine große Polfläche 21 a, 22a bilden, welche einer entsprechend vergrößerten Polfläche 11a, 11 c des Jochs 11 gegenüberliegt. Diese vergrößerten Jochpolflächen 11a, 11c werden dadurch ausgebildet, dass der Kunststoff des jeweiligen Endflansches 15 auf der betreffenden Seitenfläche des U-Schenkels 11 S des Jochs 11 in Richtung des freien Endes des U-Schenkels 11S nicht so hochgezogen ist wie auf der jeweils anderen Seitenfläche (siehe Figur 6). Entsprechend sind die Polflächen 21 a, 22a der Polschuhe 21, 22 des Ankers 20 auf der betreffenden Seite nicht nur länger ausgebildet, sondern noch nach unten hin abgewinkelt, d. h. in Richtung des jeweiligen Endflansches 15 des Spulensystems 10 vergrößert ausgebildet. In Figur 3, welche das Spulensystem 10 mit dem Anker 20 in der in Figur 1 dargestellten Schaltstellung von der Seite aus zeigt, ist die unterschiedliche Ausbildung der Polflächen 11 a, 11 b, 21 a, 22b des Jochs 11 und des Ankers 20 gut zu erkennen.

Diese asymmetrische Ausbildung des Jochs 11 und des Ankers 20 mit den einerseits vergrößerten Polflächen 11a, 11c, 21a, 22a und den andererseits verkürzten Polflächen 11 b, 11 d, 21 b, 22b führt dazu, dass in der ersten Schaltstellung gemäß Figur 1, in der die großen Polflächen 11a, 11 c, 21 a, 22a aneinander liegen, der magnetische Übergangswiderstand zwischen dem Anker 20 und dem Joch 11 relativ gering ist. In der zweiten Schaltstellung gemäß Figur 2, in der jeweils nur die kleinen Polflächen 11b, 11 d, 21 b, 22b aneinander liegen, ist dagegen der magnetische Übergangswiderstand relativ groß. Dies ist ein Beispiel dafür, wie durch Ausformung der Polflächen die jeweilige Schaltcharakteristik in den verschiedenen Schaltstellungen des Relais 1 variiert werden kann. Grundsätzlich ist es aber auch möglich, sofern dies konstruktiv gewünscht ist, die Polflächen des Ankers und des Jochs vollkommen symmetrisch auszugestalten, so dass das Relais in beiden Schaltrichtungen die gleiche Schaltcharakteristik aufweist.

Wie bereits in der WO 2008/028668 A1 erläutert, lässt sich ein solches Relais mit einem vorgefertigten Spulensystem 10 mit einem Kunststoffspulenkörper 12 und entsprechenden Kontaktsystemen 30 mit Kunststoffträgerkörpern 31 mit einfachen Mitteln relativ gut auf dem Relais-Grundkörper 2 ausrichten und fixieren.

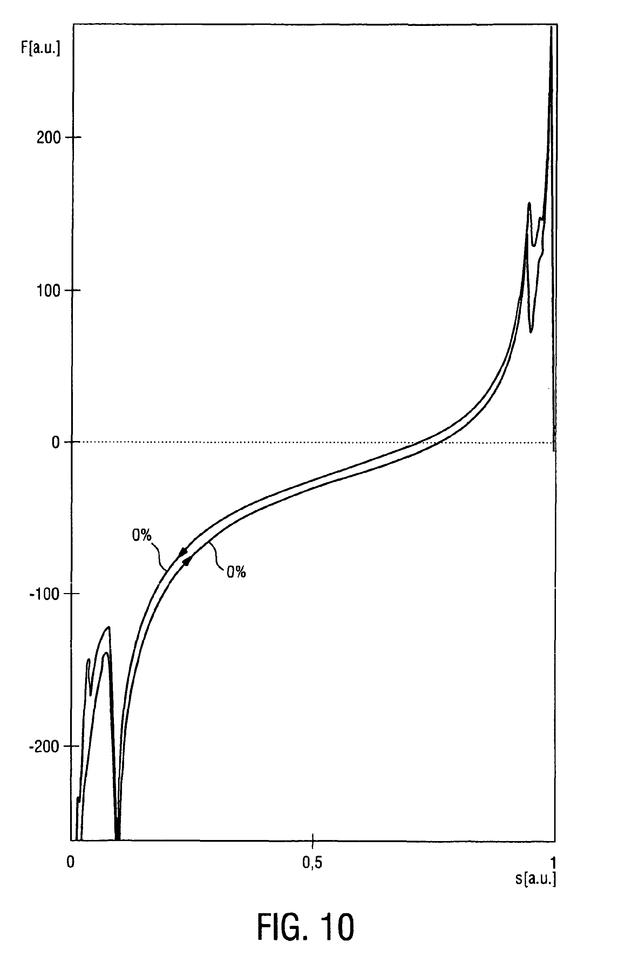

Bei einer sehr genauen Analyse des Schaltverhaltens zeigen sich aber noch Schwankungen in den Anzug- und Abfallspannungen beim Schalten des Relais 1. Diese Schwankungen sind in den in Figur 10 dargestellten Kraft-Weg-Kennlinien des Magnetsystems in Form von Kennlinienspitzen direkt zum Beginn des Schaltvorgangs, in Ansprech- und Abfallrichtung, des Relais 1 relativ gut erkennbar. In dem Diagramm ist jeweils zur Bildung der Kraft-Weg-Kennlinien die Kraft F in willkürlichen Einheiten (a. u. = arbitrary units) zwischen Anker 20 und Joch 11 in Abhängigkeit vom Abstand s zwischen den jeweils größeren Ankerpolflächen und Jochpolflächen aufgezeichnet. Der Abstand s ist dabei ebenfalls in willkürlichen Einheiten aufgetragen, hier normiert auf den maximalen Abstand zwischen den Polflächen in der zweiten Anschlagstellung gemäß Figur 2. Die beiden Kraft-Weg-Kennlinien des Magnetsystems zeigen die Hysterese bei 0% Spannung.

Ungünstigerweise verlaufen die Kennlinienspitzen nicht bei jedem Schaltvorgang in exakt definierter Weise reproduzierbar. Dies kann dazu führen, dass das Relais nicht immer sicher schaltet bzw. es ist ein entsprechend höherer Justageaufwand erforderlich, um ein zuverlässiges Schalten zu gewährleisten, wobei in dieser Justage der Überhub der Kontakte reduziert werden muss, was wieder zu einer reduzierten Lebensdauer der Kontakte führen kann. Zudem sind der Justageaufwand und der negative Einfluss der Überhubreduzierung umso höher, je kleiner das Relais aufgebaut ist. Unterhalb einer bestimmten Mindestgröße ist eine ausreichend gute Justage mit vertretbarem Aufwand nicht möglich.

Diese Schwankungen in den Kraft-Weg-Kennlinien sollten daher reduziert werden. Eine genauere Analyse der Schaltvorgänge hat gezeigt, dass die Schwankungen dadurch entstehen, dass direkt zum Beginn des Schaltens, d. h. bei kleinem Polflächenabstand, zwischen der ersten und zweiten Schaltstellung bzw. zurück der Anker jeweils zunächst etwas um den Ankerlagerzapfen taumelt. Dies ist dadurch bedingt, dass, um den Anker 20 mit der Ankerlagerbohrung 23 auf den Ankerlagerzapfen 13 stecken zu können, die Ankerlagerbohrung 23 geringfügig größer sein muss als der Außendurchmesser des Ankerlagerzapfens 13. D. h. es muss ein bestimmtes Spiel T zwischen Außendurchmesser des Ankerlagerzapfens 13 und Innendurchmesser der Ankerlagerbohrung 23 gegeben sein. Bei diesem kurzzeitigen Taumeln des Anker um den Ankerlagerzapfen im Moment des Schaltens des Relais 1 handelt es sich um ein typisches chaotisches System. Daher sind diese Schwankungen nicht exakt vorhersagbar oder reproduzierbar

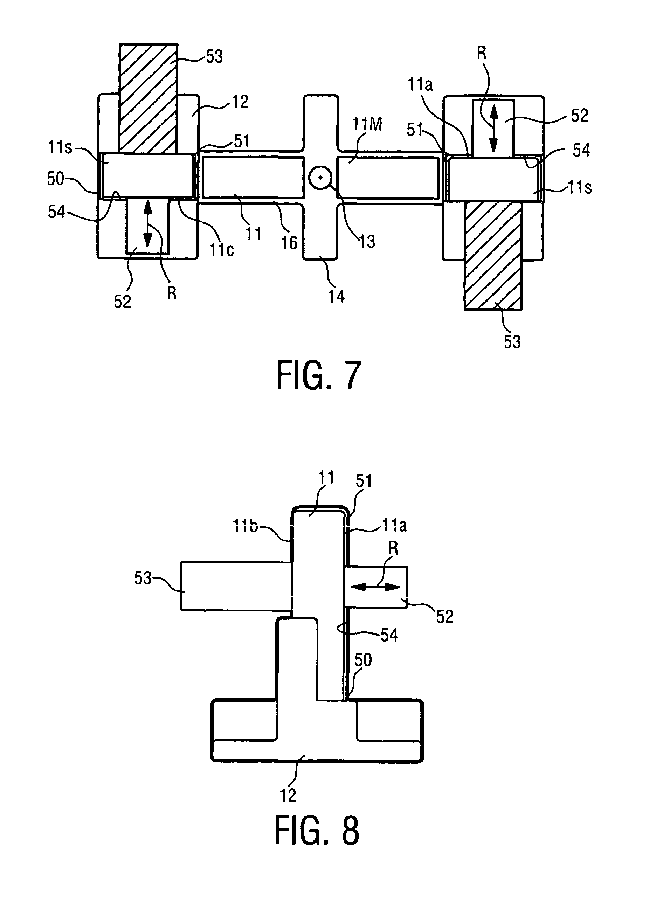

Um diesen unerwünschten Effekt zu reduzieren, wird daher erfindungsgemäß der Prozess zur Herstellung des Spulenkörpers 12 so modifiziert, dass das Joch 11 beim Umspritzen mit dem Kunststoff innerhalb der Spritzgussform mit Hilfe einer Fixiereinrichtung 52, 53 in einer bezüglich der Polflächen definierten Lage relativ zum Ankerlagerzapfen 13 ausgerichtet und zwangsfixiert wird. Zur näheren Erläuterung wird auf die Figuren 7 und 8 verwiesen.

Figur 7 zeigt wieder eine Draufsicht auf den Spulenkörper sowie grob schematisch die Kammern 51 der Spritzgussform 50, in welchen während des Spritzgussvorgangs die U-Schenkel 11 S des Jochs 11 liegen. Figur 8 zeigt eine seitliche Darstellung des Spulenkörpers 12 sowie grob schematisch der Form 50 im Querschnitt. Wie aus diesen Figuren zu ersehen ist, liegen die nicht zu umspritzenden Enden der U-Schenkel 11 S innerhalb Kammern 51 der Spritzgussform 50, deren lichtes Innenmaß so bemessen ist, dass die U-Schenkel 11S einerseits locker in diese Kammern 51 passen, andererseits aber der Spalt zwischen Joch 11 und Kammerinnenwänden 54 nicht so groß ist, dass beim Spritzgießen Kunststoff dazwischengespritzt wird und somit auch dieser Jochbereich, d. h. die Polflächen des Jochs 11, mit Kunststoff umspritzt werden. Da bei geeigneter Wahl des Kunststoffs und des Spritzgussverfahrens eine Überspritzung erst oberhalb von 0,1 mm zu befürchten ist, kann das Spiel des Jochs 11 in den jeweiligen Kammern 51 der Spritzgussform 50 bis zu ca. 0,09 mm betragen. Dadurch ist aber auch die Toleranz der Genauigkeit der Lage des Jochs 11 relativ zum Ankerlagerzapfen 13 vorgegeben.

Aus diesem Grund ist die Spritzgussform 50 gemäß einem Ausführungsbeispiel der Erfindung nun mit beweglichen Andruckelementen 52 versehen, die jeweils von einer Kammerinnenwand 54 der Kammern 51 für die Joch-U-Schenkel 11 S aus seitlich gegen das Joch 11 bzw. die entsprechende Polfläche 11 a, 11 c des U-Schenkels 11 S des Jochs 11 drücken und diese somit in eine genau definierte Stellung gegen ein auf der gegenüberliegenden Seite einen Bereich der Innenwand 54 der Kammer 51 bildendes Stopperelement 53 als feststehenden Anschlag 53 drücken. Grundsätzlich kann auch die Kammer 51 so ausgebildet sein, dass ihre Innenwand als Stopperelement bzw. Anschlag dient. Die Lage der gegen das Stopperelement gedrückten Polflächen des Jochs 11 relativ zum Ankerlagerzapfen 13 ist somit exakt definiert, d. h. sie hängt nicht mehr vom Spiel des Jochs 11 innerhalb der Spritzgussform 50 ab. Lediglich besteht noch ein geringes Spiel in eine Richtung senkrecht zur Bewegungsrichtung R der beweglichen Andruckelemente 52. Dies spielt aber keine Rolle, da die Lage der Polflächen in den wesentlichen Richtungen relativ zum Ankerlagerzapfen 13 nicht tangiert wird.

In dem in der Figur 7 dargestellten bevorzugten Ausführungsbeispiel sind die Andruckelemente 52 und die Stopperelemente 53 so positioniert, dass die beiden U-Schenkel 11 S jeweils in gleicher Drehrichtung um den Ankerlagerzapfen 13 gegen die Stopperelemente 53 gedrückt werden. Das heißt, die Kraft auf die U-Schenkel 11 S des Jochs 11 wirkt jeweils auf die bezüglich des Ankerlagerzapfens 13 kreuzweise gegenüberliegenden Polflächen 11a, 11 c. Wie dies insbesondere anhand der in Figur 5 eingezeichneten Diagonallinien zwischen entsprechend kreuzweise gegengleichen Punkten auf den Polflächen verdeutlicht wird, wird durch diese Ausrichtung der Mittelpunkt des Ankerlagerzapfens 13 genauer definiert. Dies führt dazu, dass bei der Passgenauigkeit von dem Ankerlagerzapfen 13 und der Ankerlagerbohrung 23 mit einem geringeren Spiel T gearbeitet werden kann. Während bei einem herkömmlich hergestellten Spulenkörper ein Spiel von 0,1 mm bis 0,15 mm eingehalten werden muss, kann nun mit einem Spiel von nur 0,03 mm gearbeitet werden. Das heißt, es wird eine erheblich bessere Passgenauigkeit erreicht als bei den herkömmlichen Spulenkörpern, was sich entsprechend auf das Schaltverhalten auswirkt, da der Anker 20 nicht mehr im gleichen Maße wie bisher um den Ankerlagerzapfen 13 taumeln kann.

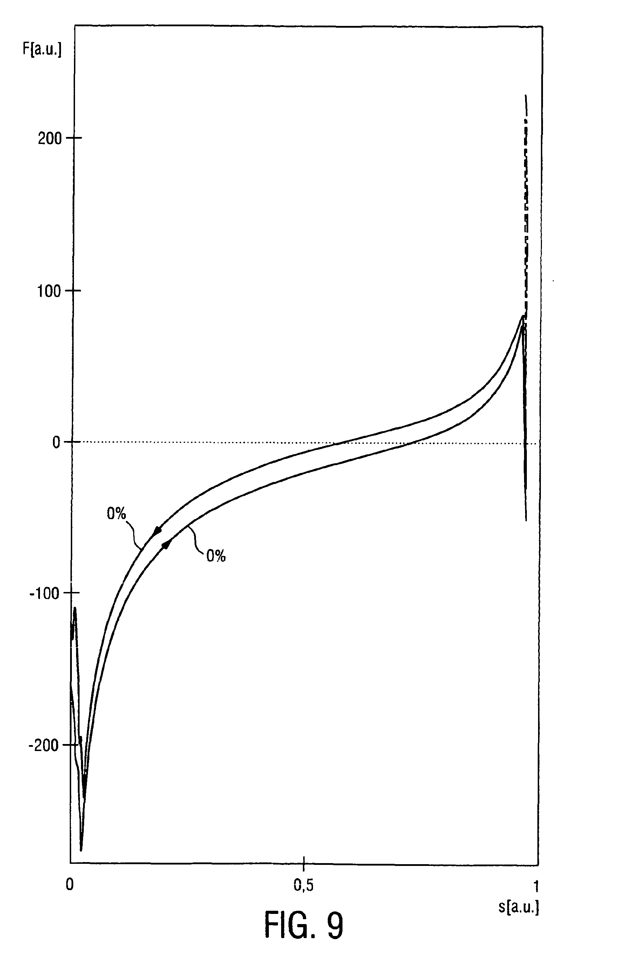

Das Ergebnis ist unmittelbar aus einer Vergleichsmessung von Kraft-Weg-Kennlinien eines erfindungsgemäßen Relais erkennbar, welche in Figur 9 dargestellt sind. Vergleicht man diese Kraft-Weg-Kennlinien in Figur 9 mit den Kraft-Weg-Kennlinien eines Relais mit einem in herkömmlicher Weise aufgebauten Spulenkörper, wie sie in Figur 10 dargestellt sind, ist sofort ersichtlich, dass die Schwankungen in der Anzug- und Abfallspannung erheblich reduziert werden können.

Die erfindungsgemäße Zwangsfixierung des Jochs 11 beim Umspritzen mit dem Kunststoff innerhalb der Spritzgussform 50 hat außerdem weitere Vorteile.

Ein Vorteil wird unmittelbar aus Figur 4 im Vergleich mit Figur 3 deutlich. In Figur 4 ist (stark übertrieben) der Fall dargestellt, dass das Joch 11 durch eine Schrägstellung des Jochs eine leichte Verkippung relativ zum Ankerlagerzapfen 13 aufweist. Auch dies kann bei der bisherigen Konstruktionsweise ohne die erfindungsgemäße Zwangsfixierung passieren. In der Folge führt dies dazu, dass die Polflächen des Jochs 11 und die Polflächen des Ankers 20 leicht schräg aufeinander stehen, so dass kein optimaler Magnetfluss gewährleistet ist. Durch die erfindungsgemäße Zwangsfixierung des Jochs 11 innerhalb der Spritzgussform 50 wird eine solche Schrägstellung sicher vermieden.

Ein weiterer besonderer Vorteil des Verfahrens ergibt sich zudem in Kombination mit dem nachfolgenden Montageprozess des gesamten Relais 1 gemäß der WO 2008/028668 A1. Wie dort beschrieben, erfolgt ja eine Ausrichtung der Kontaktsysteme 30 mit Hilfe einer speziellen Lehre, die eine genaue Positionierung der Kontaktsysteme 30 relativ zum Spulensystem 10, nämlich dem Joch 11 des Spulensystems 10, vorgibt. Durch die Erfindung wird gewährleistet, dass die Polflächen des Jochs 11, welche ja als Referenzflächen für die weitere Ausrichtung der Kontaktsysteme 30 dienen, bezüglich des Ankerlagerzapfens 13 exakt ausgerichtet sind. Das heißt, die gesamte Ausrichtung der Kontaktsysteme 30 ist nun auch gegenüber der Lage des Ankers 20 exakter, der ja letztlich, wie dies in den Figuren 1 und 2 dargestellt ist, über den Betätiger 3 mit den Kontaktfedern 32 gekoppelt ist. Auf diese Weise wird wiederum gewährleistet, dass die Abstände zwischen den Polflächen, hier der Abstand zwischen der Polfläche 11 b des Jochs 11 und dem Festkontaktelement 35 des betreffenden Kontaktsystems 30, welche ja durch die Justage bei der Montage des Spulensystems und des Kontaktsystems auf dem Relais-Grundkörper 2 festgelegt werden (d. h. die in Figur 1 eingezeichnete Strecke a-b) immer in einem genau definierten Verhältnis zur Strecke der Kopplungspunkte zwischen Anker 20 und Betätiger 2 sowie der Kontaktfeder 32 und dem Betätiger 3 liegen (in Figur 1 die Strecke c-d). Die Positionierung der Kontaktsysteme über eine Relais-Produktionsserie ist daher erheblich besser, so dass keine extra Justage des Überhubs der einzelnen Kontakte notwendig ist und somit die Lebensdauer der Kontakte und folglich die Gesamtlebensdauer der Relais erhöht werden kann.

Trotz höherer Kosten für die Herstellung eines Spritzgusswerkzeugs mit einer Fixiereinrichtung ergibt sich so insgesamt eine enorme Kosteneinsparung, da das gesamte Relais nahezu justagefrei herstellbar ist, wogegen bei den heutigen Produktionslinien meist noch eine Nachjustage erforderlich ist. Zudem ist mit diesem Verfahren auch eine weitere Miniaturisierung des Relais möglich. Dies führt zu einem geringeren Lagerbedarf, geringeren Transportkosten sowie einer breiteren Anwendbarkeit des Relais.

## Patentansprüche

1. Verfahren zur Herstellung eines Spulensystems (10) für ein elektromagnetisches Relais (1), bei dem In einer Spritzgussform ein Spulenkörper (12) durch teilweises Umspritzen eines Jochs (11) mit Kunststoff erzeugt und dann der Spulenkörper (12) mit einer Spule (19) versehen wird, wobei das Joch (11) beim Umspritzen mit dem Kunststoff innerhalb der Spritzgussform (50) mit Hilfe einer Fixiereinrichtung (52, 53) fixiert wird,
wobei das Joch (11) in der Spritzgussform (50) so fixiert wird, dass eine exakt definierte Ausrichtung zumindest einer Polfläche (11a, 11 b, 11c, 11 d) des Jochs (11) relativ zu einem Ankerlager (13) des Spulenkörpers (12) erfolgt, an welchem ein Anker (20) mit dem Spulenkörper (12) gekoppelt wird, wobei
das Joch (11) U-förmig ausgebildet ist und das Ankerlager (13) am Spulenkörper (12) so ausgebildet ist, dass der Anker (20) um eine sich parallel zwischen den beiden U-Schenkeln (11S) des Jochs (11) erstreckende Ankerlagerachse (A) verschwenkbar ist,
und dass vor dem Spritzgießen jeweils von einer Innenwand (54) der Spritzgussform (50) aus in die Spritzgussform (50) herein Druckelemente (52) bewegt werden, welche zur Fixierung des Jochs (11) seitlich auf parallel zur U-Querschnittsfläche liegende Seitenflächen der U-Schenkel (11S) des Jochs (11) drücken und die U-Schenkel (11 S) jeweils an einer bestimmten Position in der Spritzgussform (50) halten, wobei durch die beweglichen Druckelemente (52) jeweils eine Kraft auf die bezüglich der Ankerlagerachse (A) kreuzweise gegenüberliegenden Seitenflächen (11 a, 11 c) der beiden U-Schenkel (11S) des Jochs (11) wirkt.

2. Verfahren nach Anspruch 1, wobei das Joch (11) unter Bildung des Spulenkörpers (12) zumindest partiell im Bereich des U-Balkens (11 M) mit Kunststoff umspritzt wird, wobei die U-Schenkel (11 S) des Jochs (11) an beiden Seiten aus dem Kunststoffteil des Spulenkörpers (12) herausragen und die Polflächen (11a, 11b, 11c, 11d) aufweisen und wobei der Spulenkörper (12) so geformt ist, dass sich ein Ankerlagerzapfen (13) zwischen den beiden U-Schenkeln (11S) des Jochs (11) parallel zu diesen erstreckt.

3. Verfahren zur Herstellung eines elektromagnetischen Relais (1) mit folgenden Verfahrensschritten:
- Herstellung eines Spulensystems (10) nach einem der Ansprüche 1 oder 2,
- Kopplung des Spulensystems (10) mit einem Anker (20).
- Montage des Spulensystems (10) an einem Relais-Grundkörper (2),
- Montage eines Kontaktsystems (30) an dem Relais-Grundkörper (2),
- Kopplung eines Kontakts (34) des Kontaktsystems (30) mit dem Anker.

4. Verfahren nach Anspruch 3, wobei bei einer Montage des Kontaktsystems (30) an dem Relais-Grundkörper (2) das Kontaktsystem (30) an einer Polfläche (11 b) des Jochs (11) ausgerichtet wird.

5. Spulensystem (10) für ein elektromagnetisches Relais (1), welches Spulensystem (10) einen durch teilweises Umspritzen eines Jochs (11) mit Kunststoff in einer Spritzgussform (50) erzeugten Spulenkörper (12) aufweist, der mit einer Spule (19) versehen ist, wobei sich zumindest eine Polfläche (11a, 11b, 11c, 11d) des Jochs (11), durch eine mit Hilfe einer Fixiereinrichtung (52, 53) erreichte Zwangsfixierung des Jochs (11) innerhalb der Spritzgussform (50) während des Umspritzens mit dem Kunststoff, in einer exakt definierten Ausrichtung relativ zu einem Ankerlager (13) des Spulenkörpers (12) befindet, an welchem ein Anker (20) mit dem Spulenkörper (12) koppelbar ist, wobei
das Joch (11) U-förmig ausgebildet ist und das Ankerlager (13) am Spulenkörper (12) so ausgebildet ist, dass der Anker (20) um eine sich parallel zwischen den beiden U-Schenkeln (11S) des Jochs (11) erstreckende Ankerlagerachse (A) verschwenkbar ist,
und dass vor dem Spritzgießen jeweils von einer Innenwand (54) der Spritzgussform (50) aus in die Spritzgussform (50) herein Druckelemente (52) bewegt wurden, welche zur Fixierung des Jochs (11) innerhalb der Spritzgussform (50) während des Umspritzens mit dem Kunststoff seitlich auf parallel zur U-Querschnittsfläche liegende Seitenflächen der U-Schenkel (11S) des Jochs (11) drücken und die U-Schenkel (11S) jeweils an einer bestimmten Position in der Spritzgussform (50) halten, wobei durch die beweglichen Druckelemente (52) jeweils eine Kraft auf die bezüglich der Ankerlagerachse (A) kreuzweise gegenüberliegenden Seitenflächen (11 a, 11 c) der beiden U-Schenkel (11 S) des Jochs (11) wirkt.

6. Elektromagnetisches Relais (1) mit einem Grundkörper (2), einem am Grundkörper (2) angeordneten Spulensystem (10) nach Anspruch 5, welches mit einem Anker (20) gekoppelt ist, und einem am Grundkörper (2) angeordneten, mit dem Anker (20) gekoppelten Kontaktsystem (30).

7. Spritzgussform (50) zur Herstellung eines Spulenkörpers (12) durch teilweises Umspritzen eines Jochs (11) mit Kunststoff für ein Spulensystem (10) eines elektromagnetischen Relais (1) wobei die Spritzgussform (50) eine Fixiereinrichtung (52, 53) aufweist, um das Joch (11) beim Umspritzen mit dem Kunststoff innerhalb der Spritzgussform (50) zu fixieren, wobei die Spritzgussform (50) zumindest einen Anschlag (53) aufweist, um das Joch (11) beim Umspritzen mit dem Kunststoff innerhalb der Spritzgussform (50) so zu fixieren, dass eine exakt definierte Ausrichtung zumindest einer Polfläche (11a, 11b, 11c, 11d) des Jochs (11) relativ zu einem Ankerlager (13) des Spulenkörpers (12, 12') erreicht wird, an welchem ein Anker (20) mit dem Spulenkörper (12) koppelbar ist, wobei
die Spritzgussform (50) zum Umspritzen eines U-förmigen Jochs (11) ausgebildet ist und das Ankerlager (13) am Spulenkörper (12) so ausgebildet wird, dass der Anker (20) um eine sich parallel zwischen den beiden U-Schenkeln (11S) des Jochs (11) erstreckende Ankerlagerachse (A) verschwenkbar ist,
und dass die Spritzgussform (50) von einer Innenwand (54) aus in die Spritzgussform (50) herein bewegliche Druckelemente (52) aufweist, welche zur Fixierung des Jochs (11) innerhalb der Spritzgussform (50) während des Umspritzens mit dem Kunststoff seitlich auf parallel zur U-Querschnittsfläche liegende Seitenflächen der U-Schenkel (11S) des Jochs (11) drücken und die U-Schenkel (11S) jeweils an einer bestimmten Position in der Spritzgussform (50) halten, wobei durch die beweglichen Druckelemente (52) jeweils eine Kraft auf die bezüglich der Ankerlagerachse (A) kreuzweise gegenüberliegenden Seitenflächen (11a, 11c) der beiden U-Schenkel (11 S) des Jochs (11) wirkt.

## Claims

1. A method for manufacturing a coil system (10) for an electromagnetic relay (1), in which a coil former (12) is produced by partially coating a yoke (11) with plastic in an injection mould and the coil former (12) is then provided with a coil (19), with the yoke (11) being fixed within the injection mould (50) with the aid of a fixing device (52, 53) while it is coated with plastic, whereby the yoke (11) is fixed in the injection mould (50) in such a way that at least one pole face (11a, 11b, 11c, 11d) of the yoke (11) has an exactly defined alignment relative to an armature bearing (13) of the coil former (12), on which an armature (20) is coupled to the coil former (12), whereby the yoke (11) is realized in a U-shaped fashion and the armature bearing (13) on the coil former (12) is realized in such a way that the armature (20) can be pivoted about an armature bearing axis (A) extending parallel between the two U-limbs (11S) of the yoke (11),
and whereby pressure elements (52) are respectively moved from an inner wall (54) of the injection mould (50) into the injection mould (50) prior to the injection-moulding process, with said pressure elements laterally pressing against lateral faces of the U-limbs (11S) of the yoke (11) that lie parallel to the U-crossectional area in order to fix the yoke (11), as well as respectively holding the U-limbs (11S) in a certain position in the injection mould (50), whereby the movable pressure elements (52) cause a force to act upon the lateral faces (11a, 11c) of the two U-limbs (11S) of the yoke (11) that lie diagonally opposite to one another relative to the armature bearing axis (A).

2. The method according to Claim 1, whereby the yoke (11) is at least partially coated with plastic in the region of the U-crossbar (11 M) in order to produce the coil former (12), with the U-limbs (11S) of the yoke (11) protruding from the plastic part of the coil former (12) on both sides and featuring the pole faces (11 a, 11b, 11c, 11 d), and whereby the coil former (12) being shaped in such a way that an armature bearing journal (13) extends parallel to and between the two U-limbs (11S) of the yoke (11).

3. A method for manufacturing an electromagnetic relay (1) with the following steps:
- manufacturing a coil system (10) according to one of Claims 1 or 2,
- coupling the coil system (10) to an armature (20),
- installing the coil system (10) on a relay base body (2),
- installing a contact system (30) on the relay base body (2),
- coupling a contact (34) of the contact system (30) to the armature.

4. The method according to Claim 3, whereby the contact system (30) is aligned on a pole face (11 b) of the yoke (11) during the installation of the contact system (30) on the relay base body (2).

5. A coil system (10) for an electromagnetic relay (1), with said coil system (10) featuring a coil former (12) that is produced by partially coating a yoke (11) with plastic in an injection mould (50) and provided with a coil (19),
whereby at least one pole face (11a, 11b, 11c, 11 d) of the yoke (11) has - due to fixing the yoke (11) within the injection mould (50) with the aid of a fixing device (52, 53) while it is coated with plastic - an exactly defined alignment relative to an armature bearing (13) of the coil former (12), on which an armature (20, 20') can be coupled to the coil former (12), whereby the yoke (11) is realized in a U-shaped fashion and the armature bearing (13) on the coil former (12) is realized in such a way that the armature (20) can be pivoted about an armature bearing axis (A) extending parallel between the two U-limbs (11S) of the yoke (11),
and whereby pressure elements (52) are respectively moved from an inner wall (54) of the injection mould (50) into the injection mould (50) prior to the injection-moulding process, with said pressure elements laterally pressing against lateral faces of the U-limbs (11S) of the yoke (11) that lie parallel to the U-crossectional area in order to fix the yoke (11) within the injection mould (50) while it is coated with plastic, as well as respectively holding the U-limbs (11S) in a certain position in the injection mould (50), whereby the movable pressure elements (52) cause a force to act upon the lateral faces (11a, 11c) of the two U-limbs (11 S) of the yoke (11) that lie diagonally opposite to one another relative to the armature bearing axis (A).

6. An electromagnetic relay (1) with a base body (2), a coil system (10) according to Claim 5 that is arranged on the base body (2) and coupled to an armature (20), and a contact system (30) that is arranged on the base body (2) and coupled to the armature (20).

7. An injection mould (50) for manufacturing a coil former (12) for a coil system (10) of an electromagnetic relay (1) by partially coating a yoke (11) with plastic, whereby the injection mould (50) features a fixing device (52, 53) in order to fix the yoke (11) within the injection mould (50) while it is coated with plastic, with the injection mould (50) featuring at least one stop (53) in order to fix the yoke (11) within the injection mould (50) while it is coated with plastic in such a way that at least one pole face (11a, 11b, 11c, 11d) of the yoke (11) has an exactly defined alignment relative to an armature bearing (13) of the coil former (12, 12'), on which an armature (20) can be coupled to the coil former (12), whereby the injection mould (50) is designed for coating a U-shaped yoke (11) and the armature bearing (13) on the coil former (12) is realized in such a way that the armature (20) can be pivoted about an armature bearing axis (A) extending parallel between the two U-limbs (11S) of the yoke (11),
and whereby the injection mould (50) features pressure elements (52) that can be moved from an inner wall (54) into the injection mould (50), with said pressure elements laterally pressing against lateral faces of the U-limbs (11S) of the yoke (11) that lie parallel to the U-crossectional area in order to fix the yoke (11) within the injection mould (50) while it is coated with plastic, as well as respectively holding the U-limbs (11S) in a certain position in the injection mould (50), whereby the movable pressure elements (52) cause a force to act upon the lateral faces (11a, 11c) of the two U-limbs (11S) of the yoke (11) that lie diagonally opposite to one another relative to the armature bearing axis (A).

## Revendications

1. Procédé pour la fabrication d'un système de bobine (10) pour un relais électromagnétique (1), dans lequel on réalise dans un moule à injection un corps de bobine (12) en enrobant partiellement par moulage par injection une culasse (11) avec de la matière plastique et le corps de bobine (12) étant ensuite pourvu d'une bobine (19), moyennant quoi, lors de l'enrobage par moulage par injection avec la matière plastique de la culasse (11) à l'intérieur du moule à injection (50), celle-ci est fixée à l'aide d'un dispositif de fixation (52, 53), moyennant quoi
la culasse (11) est fixée dans le moule à injection (50) de manière à ce qu'une orientation définie avec exactitude d'au moins une face polaire (11 a, 11 b, 11 c, 11 d) de la culasse (11) s'effectue par rapport à un logement d'armature (13) du corps de bobine (12) sur lequel une armature (20) est couplée avec le corps de bobine (12), moyennant quoi
la culasse (11) est réalisée en forme de U et le logement d'armature (13) étant réalisé sur le corps de bobine (12) de manière à ce que l'armature (20) puisse pivoter autour d'un axe de logement d'armature (A) s'étendant parallèlement entre les deux bras en U (11 S) de la culasse (11), et
des éléments de pression (52) étant déplacés avant le moulage par injection respectivement à partir d'une paroi interne (54) du moule à injection (50) jusqu'à l'intérieur du moule à injection (50), lesquels éléments poussent latéralement sur des surfaces latérales situées en parallèle à la surface en coupe transversale en U des bras en U (11S) de la culasse (11) pour la fixation de la culasse (11) et maintiennent respectivement les bras en U (11 S) dans une position définie dans le moule à injection (50), moyennant quoi grâce aux éléments de pression (52) mobiles, une force respective s'exerce sur les surfaces latérales (11 a, 11 c) situées en vis-à-vis de manière croisée compte tenu de l'axe de logement d'armature (A) des deux bras en U (11S) de la culasse (11).

2. Procédé selon la revendication 1, dans lequel la culasse (11) est enrobée par moulage par injection avec une matière plastique au moins partiellement dans la zone de la barre en U (11 M) en formant le corps de bobine (12), les bras en U (11 S) de la culasse (11) dépassant des deux côtés de la partie en matière plastique du corps de bobine (12) et présentant les faces polaires (11 a, 11b, 11c, 11d), et moyennant quoi le corps de bobine (12) est formé de manière à ce qu'un tourillon de logement d'armature (13) s'étend entre les deux bras en U (11 S) de la culasse (11) de manière parallèle à ceux-ci.

3. Procédé pour la fabrication d'un relais électromagnétique (1) avec les étapes suivantes du procédé :
- fabrication d'un système de bobine (10) selon l'une des revendications 1 ou 2,
- couplage du système de bobine (10) avec une armature (20),
- montage du système de bobine (10) sur un corps de base de relais (2),
- montage d'un système de contact (30) sur le corps de base de relais (2),
- couplage d'un contact (34) du système de contact (30) avec l'armature.

4. Procédé selon la revendication 3, dans lequel lors d'un montage du système de contact (30) sur le corps de base de relais (2), le système de contact (30) est orienté grâce à une face polaire (11 b) de la culasse (11).

5. Système de bobine (10) pour un relais électromagnétique (1), lequel système de bobine (10) présente un corps de bobine (12) réalisé en enrobant partiellement par moulage par injection une culasse (11) avec de la matière plastique dans un moule à injection (50), lequel corps de bobine est muni d'une bobine (19), au moins une face polaire (11a, 11 b, 11 c, 11 d) de la culasse (11) - grâce à une fixation forcée de la culasse (11) obtenue à l'aide d'un dispositif de fixation (52, 53) à l'intérieur du moule à injection (50) pendant l'enrobage par moulage par injection avec de la matière plastique - se trouvant dans une orientation définie avec exactitude par rapport à un logement d'armature (13) du corps de bobine (12) sur lequel une armature (20, 20') peut être couplée avec le corps de bobine (12), moyennant quoi la culasse (11) est réalisée en forme de U et le logement d'armature (13) étant réalisé sur le corps de bobine (12) de manière à ce que l'armature (20) puisse pivoter autour d'un axe de logement d'armature (A) s'étendant parallèlement entre les deux bras en U (11 S) de la culasse (11), et des éléments de pression (52) ayant été déplacés avant le moulage par injection respectivement à partir d'une paroi interne (54) du moule à injection (50) jusqu'à l'intérieur du moule à injection (50), lesquels éléments poussent latéralement sur des surfaces latérales situées en parallèle à la surface en coupe transversale en U des bras en U (11 S) de la culasse (11) pour la fixation de la culasse (11) pendant l'enrobage par moulage par injection et maintiennent respectivement les bras en U (11S) dans une position définie dans le moule à injection (50), moyennant quoi grâce aux éléments de pression (52) mobiles, une force respective s'exerce sur les surfaces latérales (11a, 11c) situées en vis-à-vis de manière croisée compte tenu de l'axe de logement d'armature (A) des deux bras en U (11 S) de la culasse (11).

6. Relais électromagnétique (1) avec un corps de base (2), un système de bobine (10) selon la revendication 5 disposé sur le corps de base (2), lequel est couplé avec une armature (20), et avec un système de contact (30) disposé sur le corps de base (2) et couplé avec l'armature (20).

7. Moule à injection (50) pour la fabrication d'un corps de bobine (12) en enrobant partiellement par moulage par injection une culasse (11) avec de la matière plastique pour un système de bobine (10) d'un relais électromagnétique (1), moyennant quoi le moule à injection (50) présente un dispositif de fixation (52, 53) afin de fixer la culasse (11) à l'intérieur du moule à injection (50) lors de l'enrobage par moulage par injection, le moule à injection (50) présentant au moins une butée (53) afin de fixer la culasse (11) à l'intérieur du moule à injection (50) lors de l'enrobage par moulage par injection avec la matière plastique de manière à obtenir une orientation définie avec exactitude d'au moins une face polaire (11 a, 11 b, 11 c, 11 d) de la culasse (11) par rapport à un logement d'armature (13) du corps de bobine (12, 12') sur lequel une armature (20) peut être couplée avec le corps de bobine (12), moyennant quoi le moule à injection (50) est réalisé pour l'enrobage par moulage par injection d'une culasse en forme de U (11) et le logement d'armature (13) sur le corps de bobine (12) étant réalisé de manière à ce que l'armature (20) puisse pivoter autour d'un axe de logement d'armature (A) s'étendant parallèlement entre les deux bras en U (11 S) de la culasse (11),
et le moule à injection (50) présentant des éléments de pression (52) mobiles à partir d'une paroi interne (54) jusqu'à l'intérieur du moule à injection (50) lesquels, pour la fixation de la culasse (11) à l'intérieur du moule à injection (50) pendant l'enrobage par moulage par injection avec la matière plastique, poussent latéralement sur des surfaces latérales situées en parallèle à la surface en coupe transversale en U des bras en U (11 S) de la culasse (11) et maintiennent respectivement les bras en U (11S) dans une position définie dans le moule à injection (50), moyennant quoi grâce aux éléments de pression (52) mobiles, une force respective s'exerce sur des surfaces latérales (11 a, 11 c) situées en vis-à-vis de manière croisée compte tenu de l'axe de logement d'armature (A) des deux bras en U (11 S) de la culasse (11).
